# FASCICULE DE BREVET EUROPEEN

(11) **EP 3 022 257 B1**
(45) Date de publication et mention de la délivrance du brevet: **19.02.2020**
(21) Numéro de dépôt: 14749887.7
(22) Date de dépôt: 26.06.2014
(51) Int. Cl.: C08K 3/08, C08K 3/22, C09K 21/14

(54) **MATERIAU DE PROTECTION BIOLOGIQUE A BASE D'UNE MATRICE DE POLYMERE SILICONE ET DE CHARGES**
BIOLOGISCHES SCHUTZMATERIAL AUS EINER SILIKONPOLYMERMATRIX UND FÜLLSTOFFEN
BIOLOGICAL PROTECTION MATERIAL MADE FROM A SILICONE POLYMER MATRIX AND FILLERS

(30) Priorité: 16.07.2013 FR 1356985
(43) Date de publication de la demande: 25.05.2016
(73) Titulaire: Kaefer Wanner, 92280 Suresnes Cedex (FR)
(72) Inventeur: REY, Louis, F-27950 Villez Sous Bailleul (FR); DEVE, Benjamin, F-38121 Reventin Vaugris (FR); BACOT, Eric, F-30210 Castillon Du Gard (FR)
(74) Mandataire: Fédit-Loriot
(86) Numéro de dépôt international: PCT/FR2014/051624
(87) Numéro de publication internationale: WO 2015/007973

(56) Documents cités:
- EP-A1- 1 655 328
- EP-A2- 0 413 105
- CN-A- 101 845 223
- FR-A1- 2 301 557
- FR-A1- 2 644 619
- US-B1- 6 623 864

## Description

L'invention concerne un matériau composite, solide, destiné à la protection biologique et utilisable comme élément coupe-feu dans des installations industrielles, par exemple de type centrales nucléaires.

Les installations industrielles par exemple de type centrales nucléaires requièrent la mise en œuvre de matériaux spécifiques aux performances permettant, d'une part, la protection des êtres humains contre les rayonnements ionisants et, d'autre part, de limiter, voire de confiner, des produits ou émanations toxiques susceptibles d'affecter l'environnement, notamment en cas d'incidents de fonctionnement.

Dans les centrales nucléaires, il est donc prévu toute une série de matériaux composites spécifiques destinés à des utilisations de protection diverses.

Parmi ces matériaux composites, certains doivent présenter des qualités permettant leur utilisation de protection de cloisons, de parois, de tuyaux et/ou divers câbles contre l'incendie et/ou contre le rayonnement ionisant par remplissage des espaces vides susceptibles d'exister dans ces éléments. Il est en outre indispensable que de tels matériaux puissent conserver des performances suffisantes tout au long de leur durée d'utilisation.

De tels matériaux composites sont connus, et associent une matrice de polymère silicone avec diverses charges, notamment métalliques. La matrice de polymère silicone est habituellement un élastomère de silicone bi-composant, obtenu par exemple par vulcanisation à froid d'un système bi-composant précurseur, chaque système étant une huile et/ou résine par exemple de formule générale respective R-SiOH et R'-SiOH, R et R' étant par exemple des groupements ou des chaînes hydrocarbonées, en présence d'un agent de réticulation permettant la réaction de polyaddition ou réticulation.

La présence de charges permet d'ajuster la masse volumique du matériau composite. Avant la réaction de réticulation, les charges sont ajoutées à l'un ou aux deux systèmes d'huiles de silicone, tout en contrôlant ou évitant la sédimentation desdites charges au cours de la réaction de formation du matériau composite.

Un tel matériau est mis en œuvre pour répondre à au moins trois critères physico-chimiques, à savoir une viscosité suffisante avant polyaddition, une masse volumique et une composition moléculaire appropriées à l'usage indiqué.

Il est souvent requis de mettre en œuvre ce matériau de protection *in situ,* avant la réaction de formation de ce matériau, pour des raisons pratiques, car une huile de silicone est plus à même de s'écouler et de remplir les espaces vides inter parois ou entre des ensembles de câbles ou de tuyaux. Toutefois, ceci n'exclut pas une mise en œuvre du matériau composite final par exemple pour des usages de cloisonnement.

La masse volumique du matériau composite doit être ajustée pour prendre des valeurs fixées d'au moins 2,3 g/cm³, valeurs minimales correspondant aux masses volumiques des matériaux environnants, par exemple proches du béton.

La matrice de polymère silicone ne présentant qu'une masse volumique d'environ 1,4 g/cm³, il est donc nécessaire de lui adjoindre des charges permettant d'atteindre la masse volumique fixée, tout en répondant aux exigences fixées par les pouvoirs publics, tels que leur toxicité et l'inhibition chimique.

Plus précisément, afin d'augmenter la masse volumique de la matrice polymère de silicone, il existe plusieurs options dont celle d'y adjoindre une charge de forte densité, en particulier d'au moins 7. Toutefois, des difficultés de mises en œuvre de telles charges denses peuvent apparaître du fait notamment de risques de sédimentation des charges dans la composition liquide de précurseurs lorsque celle-ci est utilisée. Il peut en résulter un matériau composite présentant une hétérogénéité de répartition de la masse volumique en son sein, ce qui en affecte les propriétés désirées. En outre, parmi les charges recherchées, certaines doivent présenter une prise d'huile acceptable, définie selon DIN EN ISO 787-5 : 1995. Il convient par ailleurs de contrôler notamment la taille particulaire, laquelle influe sur la sédimentation. Le choix des tailles particulaires doit également éviter des surcoûts de mise en œuvre, ce qui élimine des particules trop fines, typiquement inférieures au micromètre.

Il est par conséquent nécessaire de rechercher un bon compromis parmi les critères précités.

Le plomb, en tant que charge, a longtemps été utilisé, mais celui-ci présente une toxicité rendant son emploi non conforme aux normes environnementales en vigueur.

En alternative, il est couramment mis en œuvre des charges métalliques constituées de tungstène, de cuivre ou d'un mélange de tungstène et de cuivre. Cependant, une telle mise en œuvre présente des inconvénients, tels que la formation d'hydrogène au sein de la matrice de polymère silicone, une sédimentation trop rapide de la charge, d'environ 2 h, ne permettant pas son utilisation efficace *in situ,* et de coûts prohibitifs.

La demande de brevet CN101845223 décrit un matériau en élastomère de silicone haute densité ayant des propriétés de résistance au feu et à la pénétration de rayonnements, pouvant être utilisé dans les centrales nucléaires. Il décrit une composition de matériau comprenant une poudre métallique pouvant être choisie parmi une poudre de fer, de cuivre, d'aluminium, de nickel, et de plomb. Cette composition peut comprendre des pigments de couleur de chrome ou de carbone ou un oxyde de fer jaune et/ou noir. Toutefois il ne traite pas du problème de la mise en œuvre de la composition, en particulier pour former le matériau in situ.

Par conséquent, il subsiste un besoin de mettre à disposition un matériau composite pour une utilisation sur site industriel, en particulier dans les centrales nucléaires, présentant des performances coupe-feu et/ou de protection biologique constantes sur une longue durée d'utilisation, qui soit peu couteux et simple à mettre en œuvre.

L'invention concerne un matériau composite selon la revendication 1, présentant des propriétés coupe-feu et de protection biologique comprenant une matrice de polymère silicone solide et des particules à base de fer en quantités efficaces pour conférer audit matériau composite une masse volumique d'au moins 2,3 g/cm³, avantageusement d'au moins 2,4 g/cm³, avantageusement d'au moins 2,5 g/cm³, avantageusement de moins de 10 g/cm³, et avantageusement de moins de 7 g/cm³.

Grâce à l'invention il est possible de mettre à disposition un matériau composite présentant les avantages suivants.

Les performances de protection biologique et/ou de coupe-feu, notamment vis-à-vis du rayonnement ionisant, sont conservées, voire
accrues par rapport aux produits de l'art antérieur, ce qui rend ledit matériau apte à être utilisé sur des sites industriels sensibles, tels que les centrales nucléaires, en particulier sur de grandes périodes de temps, par exemple supérieures à 10 ans.

Les performances coupe-feu peuvent notamment respecter la norme EN 1366/3 et le classement EI 120.

La protection biologique, notamment vis-à-vis des rayons gamma, peut être définie sur la base d'un matériau porteur A, par exemple de type mur ou cloison, présentant une épaisseur A et une masse volumique A, sur lequel est fixé par plaquage un matériau composite B, de l'invention, présentant une épaisseur B et une masse volumique B, et satisfaisant la relation : épaisseur A * masse volumique A = épaisseur B * masse volumique B. A titre d'exemple, si le matériau porteur est un mur de béton de masse volumique de 2,3 g/cm³, alors le matériau composite devra présenter une masse volumique de 2,3 g/cm³, à épaisseur égale.

Grâce à la présence de particules à base de fer, il est observé une vitesse de sédimentation d'environ 24 h dans une composition d'huiles de silicone, lorsque ce type de composition de précurseurs est utilisée, ce qui peut permettre une utilisation efficace *in situ* de cette composition, en vue de l'obtention du matériau composite. On peut ainsi éviter des hétérogénéités de répartition des masses volumiques, conduisant à des zones présentant des masses volumiques inférieures à celles requises, ce qui en altère les propriétés. En outre, le fer présente une masse volumique appropriée à l'obtention d'un matériau composite de densité d'au moins 2,3 et n'est pas activable sous l'effet du rayonnement ionisant.

Les particules à base de fer sont en outre aisément disponibles dans le commerce et sont peu coûteuses et non toxiques.

Dans le cadre de l'invention, les particules à base de fer peuvent être des particules de fer pur, ou des particules comportant en outre d'autres composés, par exemple alliés au fer, en des proportions de quelques pourcents, entre 0% et 10%, par exemple entre 0,1 et 5%.

La matrice polymère silicone solide peut être tout polymère élastomère silicone disponible dans le commerce. En fait, la matrice polymère silicone solide peut être obtenue par réaction de vulcanisation à froid ou a chaud, par exemple de type polyaddition, par exemple d'une composition de précurseurs d'huiles ou fluides de silicone ou d'un système bi-composant d'huiles de silicone, en présence d'un agent de réticulation et d'un catalyseur, qui ne sont pas limités. L'homme du métier se référera aux ouvrages généraux traitant des polymères silicone, l'invention n'étant nullement limitée à ces matrices polymères solides.

Il est très avantageux d'utiliser un système bi-composant d'huiles ou fluides de silicone précurseurs, et de mettre en œuvre une réticulation ou polyaddition à froid. En effet, l'un des buts de l'invention est d'utiliser des compositions liquides de précurseurs aptes à combler les cavités et les espaces entre des tuyaux et câbles divers
dans des installations industrielles. Le matériau composite solide est ensuite formé comme explicité ci-avant.

Il est avantageux de préparer le matériau composite par ajout de fer particulaire dans une composition d'huiles ou fluides de silicone, puis procéder à la formation du matériau composite, par exemple par vulcanisation à froid. En variante, les particules à base de fer peuvent, le cas échéant, être réparties dans chaque composition d'huiles de silicone d'un système bi-composant.

Les particules à base de fer, ou la poudre à base de fer, peuvent présenter une taille particulaire moyenne comprise entre 1 et 2000 µm. Des tailles de particules inférieures à 1 µm requièrent des quantités importantes de composition d'huiles de silicone pour une mouillabilité acceptable du fer au sein de cette composition, ce qui peut engendrer des problèmes de fluidité. Pour des tailles de particules supérieures à 2000 µm, on observe une sédimentation trop rapide, indésirable, et une efficacité de protection au rayonnement ionisant non satisfaisante.

Selon l'invention, la taille moyenne des particules de fer est comprise entre 5 µm et 200 µm, car les performances accrues et propriétés recherchées pour le matériau composite sont observées dans cette gamme. Avantageusement, la taille moyenne des particules est située entre 5 µm et 100 µm, avantageusement entre 5 et 70 µm, en particulier entre 5 µm et 50 µm, pour la recherche des meilleures performances avec un coût de mise en œuvre le plus économique.

Une taille moyenne des particules de fer comprise entre 50 µm et 70 µm peut être avantageuse.

La taille des particules peut avoir une répartition de type gaussienne, avec un pic entre 40 µm et 80 µm, par exemple entre 50 µm et 70 µm.

L'écart-type peut être compris par exemple entre 10 µm et 30 µm, par exemple entre 15 µm et 25 µm, par exemple 20 µm.

Les particules peuvent avantageusement avoir une forme relativement sphérique. Une particule est considérée comme relativement sphérique si aucun point n'est éloigné du barycentre de cette particule d'une distance présentant un écart de plus de 10% par rapport au rayon moyen de cette particule.

Il a été observé qu'en choisissant des particules sphériques (grenaille ronde), les endommagements du matériel de mise en œuvre,
notamment de type rayure sur des joints en Téflon (marque déposée), restaient relativement limités.

Alternativement, on pourrait choisir des billes broyées (grenaille angulaire), ce qui peut être avantageux en termes d'approvisionnement car ces particules sont couramment utilisées en pyrotechnie.

La quantité efficace en particules à base de fer peut être définie par la teneur (en poids) des particules à base de fer dans la matrice polymère silicone, laquelle teneur est avantageusement comprise entre 45% et 60%, de préférence entre 53% et 57%, en particulier égale à 55%.

Avantageusement, les particules à base de fer peuvent être constituées de fer et de carbone, le carbone étant présent en des proportions atomiques comprises entre 0,1 et environ 1,5%. Un tel produit peut être un alliage Fe-C. De telles particules Fe-C, d'une part, augmentent la durée de vie du matériau composite en évitant, selon les conditions de mise en œuvre, une oxydation excessive des particules de fer et, d'autre part, limitent la sédimentation.

Selon l'invention, outre les particules à base de fer, le matériau composite comprend des particules d'oxyde de fer, selon des teneurs de 1% à 15% en poids, de façon plus préférée de 2% à 10%, en particulier de 4% à 10% en poids par rapport au poids total du matériau composite.

Avantageusement, ces particules d'oxyde de fer peuvent être obtenues synthétiquement.

Avantageusement, ces particules d'oxyde de fer peuvent être des particules d'hématite, par exemple d'hématite rouge.

La Demanderesse a observé de façon surprenante que la présence d'oxyde de fer, de préférence d'oxyde ferrique, en particulier de type Fe₂O₃ ou Fe₃O₄ ou leur mélange, notamment en de telles quantités, permettait de limiter la vitesse de sédimentation des particules à base de fer. Sans être liés par une théorie, il est possible que cette réduction de la vitesse de sédimentation soit liée à la formation de colloïdes, ou bien encore à une modification de la viscosité de la composition d'huiles ou fluides de silicone précurseurs du fait de la présence de particules d'hématite.

Le temps de sédimentation peut être compris entre 24h et quelques semaines, par exemple entre 1 et 3 semaines, de préférence d'au moins environ 1 semaine. Ceci est très avantageux pour des mises en œuvre industrielles, permettant en outre un stockage de la composition d'huiles ou fluides de silicone avec lesdites particules, avant l'obtention du matériau composite. Ceci augmente par ailleurs l'homogénéité de la masse volumique dans toute la structure du matériau composite résultant.

La taille moyenne des particules d'oxyde de fer est habituellement comprise entre 0,10 µm et 0,30 µm, de préférence entre 0,15 et 0,25 µm.

L'invention concerne également une utilisation selon la revendication 13 d'un matériau composite comprenant une matrice de polymère silicone solide et des particules à base de fer en quantités efficaces pour conférer audit matériau composite une masse volumique d'au moins 2,3 g/cm³ , avantageusement d'au moins 2, 5 g/cm³, comme matériau coupe-feu et/ou de protection biologique dans des sites industriels représentant en particulier les centrales nucléaires.

La mise en œuvre de ce matériau peut être faite de plusieurs manières.

On peut préparer un matériau composite sous forme de parois de protection, préparé à l'avance puis mis en forme et adapté aux tailles et dimensions de murs, parois ou autres, directement sur site industriel.

La forme la plus avantageuse peut consister à prévoir des précurseurs sous forme d'un mélange bi-composant d'huiles ou de fluides de silicone, les deux composants, en présence de charges de particules à base de fer, étant ensuite réunis en présence d'un agent réticulant et/ou d'un catalyseur, opération que est suivie d'un remplissage de différentes cavités, interstices, ensemble de câbles et de tuyaux, puis réticulation pour la formation *in situ* du matériau composite.

L'invention est décrite plus en détail sur la base des exemples non limitatifs qui suivent.

Les essais de sédimentation sont mis en œuvre par mesure de la viscosité de cisaillement par analogie à la Norme ASTM D 2983 où l'huile moteur de référence est remplacée par l'huile de silicone. La vitesse de sédimentation représente le temps nécessaire pour que 10% de la charge ait sédimenté. Les mesures ont été effectuées par un viscosimètre à faible taux de cisaillement, par exemple de type EPPRECHT VISCOMETER TVB4501.

### Exemple 1 (Ne faisant pas partie de l'invention)

On utilise en tant que matrice polymère de silicone un élastomère silicone bi-composant, le RTV 1523, provenant de la Société Tremco-Illbruck (Strasbourg - France). Le RTV 1523 se présente sous l'aspect d'un liquide visqueux d'huiles de silicone, dont la masse volumique est de 1,38-1,4 g/cm³, qui se transforme après mélange des deux parties A et B et réticulation à température ambiante (par exemple 19°C-25°C), en une matrice polymère de silicone résistante au feu.

De la poudre de fer, en tant que charge, de granulométrie moyenne de 50 µm (F50, contenant 98,5% en poids de Fer, le reste étant du carbone, Société Vulkan-Inox GmbH - Allemagne) a été utilisée dans des essais de sédimentation.

On utilise 100 g d'une des parties A et B et on y incorpore 120 g de particules de fer F50 (Mélange B).

Un essai comparatif est mis en œuvre avec des particules de tungstène (AW4105 provenant de Eurotungstene - Grenoble- France)) dont 100 g sont mélangés avec 100 g de la partie A ou B de RTV 1523 (Mélange A).

Pour chaque échantillon, il est procédé à un mélange jusqu'à observer l'homogénéité puis les échantillons sont laissés au repos par stockage, à température ambiante.

Pour l'échantillon comparatif (échantillon A), on mesure le temps pour que 50% des charges aient sédimenté.

Le tableau 1 résume les résultats obtenus.

Le tableau 1 inclut également les masses volumiques obtenues après mélange des charges respectives. Ces masses volumiques sont identiques à celles obtenues pour le matériau composite après réticulation.

**Tableau 1**

| Mélange | | Masse volumique (g/cm³) |
|---|---|---|
| A (comparatif) | Sédimentation de 50% des particules (h) 0,5- 2h | 2,50 |
| B | Vitesse de sédimentation 24 h | 2,52 |

Cet essai montre que bien que le tungstène confère au mélange A une masse volumique (ou densité) requise, les particules de tungstène sédimentent très rapidement, ne permettant pas leur utilisation *in situ,* sur chantier par exemple. Une ré-homogénéisation du mélange n'est pas possible (système irréversible). La gamme de valeurs obtenues dépend de la provenance commerciale du tungstène.

En revanche, un mélange selon l'invention montre que la masse volumique obtenue est en accord avec ce qui est requis (≥ 2,3 g/cm³) et que la vitesse de sédimentation autorise une utilisation *in situ.* En effet, il est possible de mettre en œuvre ou de stocker le mélange d'huiles de silicone et de Fer (+C) sans risque de sédimentation jusqu'à 24 h ou plus selon les cas, ce qui laisse à l'utilisateur suffisamment de temps pour procéder à un mélange et de générer la réaction de réticulation. Il est toutefois possible de ré-homogénéiser l'ensemble par mélange dans le cas où il serait nécessaire de conserver ou stocker le mélange plus de 24 h.

### Exemple 2 (Ne faisant pas partie de l'invention)

Des essais de vitesse de sédimentation sont mis en œuvre avec des particules de Fe₂O₃, provenant de la Société Brenntag (Brenntag-France) sous la référence Bayferrox® 130. De telles particules ont une granulométrie moyenne de 0,17 µm, densité de 5, prise d'huile 26 g/100g (selon DIN EN ISO 787-5 : 1995).

Des essais préliminaires sont tout d'abord effectués pour juger de la fluidité des mélanges de RTV 1523 (parties A et B) et de particules de Fe₂O₃, lorsque la teneur relative en Fe₂O₃ augmente dans le mélange. Le mélange est ici le mélange prêt à l'emploi comprenant un agent de réticulation.

La mesure de la fluidité d'un mélange est mise en œuvre en considérant le temps nécessaire pour remplir une canule de 8 mm de diamètre intérieur et 650 mm de longueur. Un mélange est considéré comme ayant une fluidité satisfaisante lorsque la canule peut être remplie de façon efficace, à température ambiante (19°C-20°C), pendant une durée n'excédant pas 10 min, le temps utile étant d'environ 30 min. Le temps utile est le temps pendant lequel le mélange avec les particules de Fe₂O₃ peut être mise en œuvre avant la fin de la réaction de réticulation.

Le Tableau 2 résume les résultats obtenus.

**Tableau 2**

| Echantillon | Fluidité |
|---|---|
| 95 g RTV 1523 + 5 g Fe₂O₃ | OUI |
| 90 g RTV 1523 + 10 g Fe₂O₃ | OUI |
| 85 g RTV 1523 + 15 g Fe₂O₃ | Début de perte de fluidité |

Pour des mélange de RTV 1523 et comprenant plus de 10 g de Fe₂O₃, on observe une perte de fluidité.

### Exemple 3

Cet exemple est destiné à montrer des essais relatifs à la vitesse de sédimentation de mélanges ternaires : RTV 1523 avec des particules de fer (F50) et de Fe₂O₃ (Bayferrox® 130), où les teneurs en ces composants sont modifiées, en référence à l'Exemple 1.

On considère les échantillons suivants.
Echantillon A : 100 g RTV 1523 ; 100 g Fe50 ; 10 g Fe₂O₃.
Echantillon B : 100 g RTV 1523 ; 120 g Fe50 ; 2,5 g Fe₂O₃.
Echantillon C : 100 g RTV 1523 ; 120 g Fe50 ; 5 g Fe₂O₃.
Echantillon D : 100 g RTV 1523 ; 120 g Fe50 ; 10 g Fe₂O₃.

Pour chaque échantillon, il est procédé à un mélange jusqu'à observer l'homogénéité puis les échantillons sont laissés au repos par stockage, à température ambiante.

**Tableau 3**

| Echantillon | Vitesse de Sédimentation des particules (h) | Masse volumique (g/cm³) |
|---|---|---|
| A | >168 | 2,43 |
| B | >24 | 2,54 |
| C | 48 | 2,55 |
| D | >168 | 2,58 |

Pour l'échantillon B, un début de sédimentation n'est observé qu'au-delà de 24 h. Pour l'échantillon C, on observe une vitesse de sédimentation 48 h.

Pour l'échantillon D, on observe un début de sédimentation après 7 jours de stockage et la vitesse de sédimentation est donc supérieure à 7 jours. En revanche, après 7 jours de stockage, les charges de l'échantillon B ont totalement sédimenté et celles de l'échantillon C montrent une sédimentation incomplète.

Il convient de mentionner que tous les échantillons dont on note la sédimentation peuvent être homogénéisés après simple mélange. Toutefois, pour des raisons de praticité de mise en œuvre, il est préférable d'avoir à disposition des produits prêts à l'emploi, sans nécessiter par exemple des opérations ultérieures consommatrices de temps.

## Revendications

1. Matériau composite présentant des propriétés coupe-feu et de protection biologique comprenant une matrice de polymère silicone solide et des particules à base de fer en quantités efficaces pour conférer audit matériau composite une masse volumique d'au moins 2,3 g/cm³, et comprenant outre les particules à base de fer, des particules d'oxyde de fer, **caractérisé en ce que** la taille moyenne desdites particules à base de fer est comprise entre 5 µm et 200 µm, et **en ce que** la teneur desdites particules d'oxyde de fer est de 1% à 15% en poids par rapport au poids total du matériau composite, et **en ce que** la taille moyenne desdites particules d'oxyde de fer est comprise entre 0,10 µm et 0,30 µm.

2. Matériau composite selon la revendication 1, dans lequel la taille moyenne des particules à base de fer est comprise entre 5 µm et 100 µm.

3. Matériau composite selon l'une des revendications 1 à 2, dans lequel la taille moyenne des particules à base de fer est comprise entre 5 µm et 70 µm, en particulier entre 5 µm et 50 µm.

4. Matériau composite selon l'une des revendications 1 à 3, dans lequel la quantité efficace est définie par la teneur des particules à base de fer dans la matrice polymère silicone, laquelle teneur est avantageusement comprise entre 45% et 60% en poids, de préférence entre 53% et 57% en poids, en particulier égale à 55% en poids.

5. Matériau composite selon l'une des revendications 1 à 4, dans lequel les particules à base de fer comprennent le fer et le carbone, le carbone étant présent en des proportions atomiques comprises entre 0,1 et environ 1,5%.

6. Matériau composite selon l'une des revendications 1 à 5, dans lequel la teneur desdites particules d'oxyde de fer est de 2% à 10% en poids par rapport au poids total du matériau composite.

7. Matériau composite selon la revendication 6, dans lequel la teneur desdites particules d'oxyde de fer est de 4% à 10% en poids par rapport au poids total du matériau composite.

8. Matériau composite selon l'une des revendications 1 à 7, dans lequel la taille moyenne des particules d'oxyde de fer est comprise entre 0,15 µm et 0,25 µm.

9. Matériau composite selon l'une quelconque des revendications 1 à 8, dans lequel l'oxyde de fer est l'oxyde ferrique.

10. Matériau composite selon l'une quelconque des revendications 1 à 9, dans lequel l'oxyde de fer desdites particules d'oxyde de fer est obtenu synthétiquement.

11. Matériau composite selon l'une quelconque des revendications 1 à 10, dans lequel les particules à base de fer sont présentes en quantités efficaces pour conférer audit matériau composite une masse volumique d'au moins 2,4 g/cm³.

12. Matériau composite selon l'une quelconque des revendications 1 à 11, dans lequel les particules à base de fer sont des particules relativement sphériques.

13. Utilisation d'un matériau composite comprenant une matrice de polymère silicone solide et des particules à base de fer en quantités efficaces pour conférer audit matériau composite une masse volumique d'au moins 2,3 g/cm³, lesdites particules ayant une taille de particules entre 5 µm et 200 µm, et comprenant outre les particules à base de fer, des particules d'oxyde de fer, et la teneur desdites particules d'oxyde de fer étant de 1% à 15% en poids par rapport au poids total du matériau composite, et la taille moyenne desdites particules d'oxyde de fer étant comprise entre 0,10 µm et 0,30 µm, comme matériau coupe-feu et/ou de protection biologique dans des sites industriels.

14. Utilisation selon la revendication 13 d'un matériau composite défini à l'une quelconque des revendications 2 à 12.

15. Utilisation selon la revendication 13 ou 14, dans laquelle les sites industriels sont des centrales nucléaires.

## Patentansprüche

1. Verbundmaterial, aufweisend Brandschutz- und biologische Schutzeigenschaften, umfassend eine feste Silikonpolymermatrix und Partikel auf der Basis von Eisen in Mengen, die effizient sind, um dem Verbundmaterial eine Dichte von mindestens 2,3 g/cm³ zu verleihen, und umfassend ferner Partikel auf der Basis von Eisen, Eisenoxidpartikel, **dadurch gekennzeichnet, dass** die mittlere Größe der Partikel auf der Basis von Eisen zwischen 5 µm und 200 µm liegt und dass der Gehalt an Eisenoxidpartikeln von 1 bis 15 Gew.-% in Bezug auf das Gesamtgewicht des Verbundmaterials beträgt, und dass die mittlere Größe der Eisenoxidpartikel zwischen 0,10 µm und 0,30 µm liegt.

2. Verbundmaterial nach Anspruch 1, wobei die mittlere Größe der Partikel auf der Basis von Eisen zwischen 5 µm und 100 µm liegt.

3. Verbundmaterial nach einem der Ansprüche 1 bis 2, wobei die mittlere Größe der Partikel auf der Basis von Eisen zwischen 5 µm und 70 µm, insbesondere zwischen 5 µm und 50 µm, liegt.

4. Verbundmaterial nach einem der Ansprüche 1 bis 3, wobei die effiziente Menge durch den Gehalt an Partikeln auf der Basis von Eisen in der Silikonpolymermatrix definiert ist, wobei der Gehalt in vorteilhafter Weise zwischen 45 und 60 Gew.-%, vorzugsweise zwischen 53 und 57 Gew.-% liegt, insbesondere gleich 55 Gew.-% beträgt.

5. Verbundmaterial nach einem der Ansprüche 1 bis 4, wobei die Partikel auf der Basis von Eisen das Eisen und den Kohlenstoff umfassen, wobei der Kohlenstoff in Atomverhältnissen zwischen 0,1 und zirka 1,5 % vorhanden ist.

6. Verbundmaterial nach einem der Ansprüche 1 bis 5, wobei der Gehalt an Eisenoxidpartikeln 2 bis 10 Gew.-% in Bezug auf das Gesamtgewicht des Verbundmaterials beträgt.

7. Verbundmaterial nach Anspruch 6, wobei der Gehalt an Eisenoxidpartikeln 4 bis 10 Gew.-% in Bezug auf das Gesamtgewicht des Verbundmaterials beträgt.

8. Verbundmaterial nach einem der Ansprüche 1 bis 7, wobei die mittlere Größe der Eisenoxidpartikel zwischen 0,15 µm und 0,25 µm liegt.

9. Verbundmaterial nach einem der Ansprüche 1 bis 8, wobei das Eisenoxid das Eisen(III)oxid ist.

10. Verbundmaterial nach einem der Ansprüche 1 bis 9, wobei das Eisenoxid der Eisenoxidpartikeln synthetisch erhalten ist.

11. Verbundmaterial nach einem der Ansprüche 1 bis 10, wobei die Partikel auf der Basis von Eisen in Mengen vorhanden sind, die effizient sind, um dem Verbundmaterial eine Dichte von mindestens 2,4 g/cm³ zu verleihen.

12. Verbundmaterial nach einem der Ansprüche 1 bis 11, wobei die Partikel auf der Basis von Eisen relativ sphärische Partikel sind.

13. Verwendung eines Verbundmaterials, umfassend eine feste Silikonpolymermatrix und Partikel auf der Basis von Eisen in Mengen, die effizient sind, um dem Verbundmaterial eine Dichte von mindestens 2,3 g/cm³ zu verleihen, wobei die Partikel eine Partikelgröße zwischen 5 µm und 200 µm haben, und umfassend ferner Partikel auf der Basis von Eisen, Eisenoxidpartikel, und der Gehalt an den Eisenoxidpartikeln 1 bis 15 Gew.-% in Bezug auf das Gesamtgewicht des Verbundmaterials beträgt, und die mittlere Größe der Eisenoxidpartikel zwischen 0,10 µm und 0,30 µm liegt, als Brandschutz- und/oder biologisches Schutzmaterial an Industriestandorten.

14. Verwendung nach Anspruch 13 eines Verbundmaterials nach einem der Ansprüche 2 bis 12.

15. Verwendung nach Anspruch 13 oder 14, wobei die Industriestandorte Kernkraftwerke sind.

## Claims

1. Composite material having fire resistance and biological protection properties comprising a solid silicone polymer matrix and iron-based particles in effective quantities to give said composite material a density of at least 2.3 g/cm³, and comprising, in addition to the iron-based particles, iron oxide particles, **characterised in that** the average size of said iron-based particles lies in the range 5 µm to 200 µm, and **in that** the content of said iron oxide particles is 1 wt% to 15 wt% relative to the total weight of the composite material, and **in that** the average size of said iron oxide particles lies in the range 0.10 µm to 0.30 µm.

2. Composite material according to claim 1, wherein the average size of the iron-based particles lies in the range 5 µm to 100 µm.

3. Composite material according to one of claims 1 to 2, wherein the average size of the iron-based particles lies in the range 5 µm to 70 µm, in particular 5 µm to 50 µm.

4. Composite material according to one of claims 1 to 3, wherein the effective quantity is defined by the content of iron-based particles in the silicone polymer matrix, which content advantageously lies in the range 45 wt% to 60 wt%, preferably in the range 53 wt% to 57 wt%, and is in particular equal to 55 wt%.

5. Composite material according to one of claims 1 to 4, wherein the iron-based particles comprise iron and carbon, whereby carbon is present in atomic proportions in the range 0.1 to about 1.5%.

6. Composite material according to one of claims 1 to 5, wherein the content of said iron oxide particles is 2 wt% to 10 wt% relative to the total weight of the composite material.

7. Composite material according to claim 6, wherein the content of said iron oxide particles is 4 wt% to 10 wt% relative to the total weight of the composite material.

8. Composite material according to one of claims 1 to 7, wherein the average size of the iron oxide particles lies in the range 0.15 µm to 0.25 µm.

9. Composite material according to any one of claims 1 to 8, wherein the iron oxide is ferric oxide.

10. Composite material according to any one of claims 1 to 9, wherein the iron oxide of said iron oxide particles is obtained synthetically.

11. Composite material according to any one of claims 1 to 10, wherein the iron-based particles are present in effective quantities to give said composite material a density of at least 2.4 g/cm³.

12. Composite material according to any one of claims 1 to 11, wherein the iron-based particles are relatively spherical particles.

13. Use of a composite material comprising a solid silicone polymer matrix and iron-based particles in effective quantities to give said composite material a density of at least 2.3 g/cm³, said particles having particle size that lies in the range 5 µm to 200 µm, and comprising, in addition to the iron-based particles, iron oxide particles, and the content of said iron oxide particles being 1 wt% to 15 wt% relative to the total weight of the composite material, and the average size of said iron oxide particles lying in the range 0.10 µm to 0.30 µm, as a fire-resistant and/or biological protection material on industrial sites.

14. Use according to claim 13 of a composite material defined in any one of claims 2 to 12.

15. Use according to claim 13 or 14, wherein the industrial sites are nuclear power stations.
